# FASCICULE DE BREVET EUROPEEN

(11) **EP 2 949 247 B1**
(45) Date de publication et mention de la délivrance du brevet: **14.06.2017**
(21) Numéro de dépôt: 15168760.5
(22) Date de dépôt: 21.05.2015
(51) Int. Cl.: A47J 43/25, A47J 19/02

(54) **DISPOSITIF DE PRÉPARATION D'ALIMENTS ADAPTÉ À L'EXTRACTION DE JUS ET/OU DE COULIS**
VORRICHTUNG ZUR LEBENSMITTELZUBEREITUNG, DIE AN DIE EXTRAKTION VON SAFT UND/ODER PÜREE ANGEPASST IST
FOOD-PREPARATION DEVICE SUITABLE FOR EXTRACTING JUICE AND/OR COULIS

(30) Priorité: 28.05.2014 FR 1454898
(43) Date de publication de la demande: 02.12.2015
(73) Titulaire: SEB S.A., 69130 Ecully (FR)
(72) Inventeur: Bordes, Jean-Luc, 65100 ADE (FR); Laborde, Daniel, 64170 ARTIX (FR); Astegno, Didier, 64420 ESPOEY (FR)
(74) Mandataire: Cémeli, Eric Philippe Laurent

(56) Documents cités:
- EP-A2- 2 159 015
- WO-A2-2006/087674
- US-A- 5 680 997

## Description

La présente invention concerne le domaine technique des dispositifs de préparation d'aliments comportant un boîtier formant un logement recevant un outil de travail rotatif.

La présente invention concerne plus particulièrement, mais non exclusivement, les appareils électroménagers de préparation culinaire comportant une base motorisée portant un accessoire amovible formant un dispositif de préparation d'aliments du type précité. La présente invention concerne également les accessoires amovibles du type précité.

Les documents EP2159014 et EP2159015 divulguent un dispositif de préparation d'aliments comportant plusieurs outils de découpe rotatifs pouvant être montés alternativement sur un organe de transmission s'étendant à l'intérieur du logement. Ces outils permettent de découper en tranches, d'émincer, de pulvériser ou de râper différents aliments. Toutefois ces outils sont plus particulièrement adaptés au travail d'aliments relativement durs, ne générant pas de jus lors de leur transformation. Avec d'autres aliments plus mous et/ou plus hétérogènes, tels que notamment les tomates ou les cassis, du jus ainsi que de petites particules résiduelles telles que des pépins sont susceptibles de progresser à l'intérieur du logement et d'atteindre l'organe de transmission.

Un objet de la présente invention est de proposer un dispositif de préparation d'aliments comportant un boîtier formant un logement recevant un outil de travail rotatif, qui soit bien adapté à la transformation d'aliments mous et/ou juteux.

Un autre objet de la présente invention est de proposer un dispositif de préparation d'aliments comportant un boîtier formant un logement recevant un outil de travail rotatif, dont la réalisation reste économique.

Ces objets sont atteints avec un dispositif de préparation d'aliments comprenant :
- un outil de travail rotatif comportant une extrémité d'entraînement et une paroi latérale issue de l'extrémité d'entraînement, la paroi latérale présentant au moins un organe de travail externe,
- un boîtier définissant un logement présentant une ouverture de montage pour la mise en place de l'outil de travail dans le logement, le boîtier présentant une cheminée pour introduire les aliments à transformer, la cheminée débouchant dans le logement au moins partiellement en regard du ou de l'un au moins des organes de travail externes, le boîtier portant un organe de transmission, l'extrémité d'entraînement de l'outil de travail monté dans le logement venant en prise avec l'organe de transmission pour entraîner en rotation l'outil de travail, le logement présentant un renfoncement annulaire agencé autour de l'organe de transmission, le renfoncement annulaire étant agencé entre l'organe de transmission et la cheminée,
du fait que l'extrémité d'entrainement présente une nervure annulaire s'étendant à l'intérieur du renfoncement annulaire. Cette disposition permet de contrarier la progression des morceaux d'aliments et/ou des jus vers l'organe de transmission.

Avantageusement alors, la nervure annulaire est agencée en périphérie de l'extrémité d'entraînement. Cette disposition permet de simplifier la réalisation de l'outil de travail.

Avantageusement encore, la nervure annulaire présente un jeu inférieur ou égal à 0,5 mm avec le renfoncement annulaire. Cette disposition permet de bloquer de manière satisfaisante les pépins.

Selon une forme de réalisation avantageuse, l'extrémité d'entraînement présente une conformation annulaire s'étendant en direction d'une paroi interne circonférentielle du logement agencée entre la cheminée et le renfoncement annulaire. Une telle disposition permet de réaliser un premier blocage des pépins. De plus une telle disposition ne nécessite pas de modification du logement du boîtier.

Avantageusement alors, la conformation annulaire présente un jeu inférieur ou égal à 0,5 mm avec la paroi interne circonférentielle. Cette disposition permet de bloquer de manière satisfaisante les pépins.

Selon une autre forme de réalisation avantageuse, l'extrémité d'entraînement présente une gorge annulaire recevant une protubérance annulaire agencée autour de l'organe de transmission, la protubérance annulaire étant agencée entre le renfoncement annulaire et l'organe de transmission. Cette disposition permet de réaliser une chicane d'étanchéité relative contrariant la progression des liquides vers l'organe de transmission.

Avantageusement alors, la gorge annulaire présente un jeu inférieur ou égal à 0,5 mm avec la protubérance annulaire. Cette disposition permet de bloquer de manière satisfaisante les pépins.

Avantageusement encore, le ou au moins l'un des organes de travail externes est adjacent à un passage traversant et la paroi latérale ménage une ouverture frontale pour l'évacuation des morceaux d'aliments découpés. Cette disposition permet également d'évacuer au moins une partie des jus à l'intérieur de la paroi latérale.

Avantageusement alors, chaque organe de travail externe est adjacent à un passage traversant. Cette disposition permet d'obtenir un meilleur débit de transformation des aliments.

Avantageusement encore, le dispositif de préparation d'aliments comporte un poussoir pouvant être déplacé dans la cheminée pour pousser les aliments vers l'outil de travail.

Avantageusement encore, le dispositif de préparation d'aliments comporte un organe de rétention porté par le boîtier, l'organe de rétention prolongeant le logement pour retenir les aliments transformés par l'outil de travail. Cette disposition peut favoriser des remontées de liquide dans le logement sous l'action de l'outil de travail rotatif. Les dispositions de l'invention permettent de mieux protéger l'organe de transmission des arrivées de liquide.

Avantageusement alors, l'organe de rétention forme avec le logement un réceptacle recevant au moins une partie de l'organe de transmission. Cette disposition peut entraîner une montée du niveau de liquide dans le logement. Les dispositions de l'invention permettent un meilleur fonctionnement du dispositif de préparation d'aliments en présence de liquide dans le logement.

Avantageusement encore, l'organe de rétention est directement monté sur le boîtier. Cette disposition permet de simplifier la construction du dispositif de préparation d'aliments.

Selon une forme de réalisation, le dispositif de préparation d'aliments comprend en outre un élément motorisé assemblé avec le boîtier, l'organe de transmission étant monté libre en rotation par rapport au boîtier, l'organe de transmission étant entraîné par un moteur électrique disposé dans l'élément motorisé. Le boîtier appartient alors à un accessoire monté amovible par rapport à l'élément motorisé.

Avantageusement alors, l'élément motorisé porte le boîtier. L'élément motorisé forme ainsi une base motorisée. En alternative, le boîtier pourrait porter l'élément motorisé.

L'invention sera mieux comprise à l'étude d'un exemple de réalisation et d'une variante, pris à titre nullement limitatif, illustrés dans les figures annexées, dans lesquelles :
- la figure 1 est une vue de côté en élévation et en coupe d'un exemple de réalisation d'un dispositif de préparation d'aliments selon l'art antérieur,
- la figure 2 est une vue de côté en élévation et en coupe d'un exemple de réalisation d'un dispositif de préparation d'aliments selon l'invention,
- la figure 3 est une vue agrandie d'une partie de la figure 2,
- la figure 4 est une vue de côté en élévation et en coupe d'une variante de réalisation de l'invention.

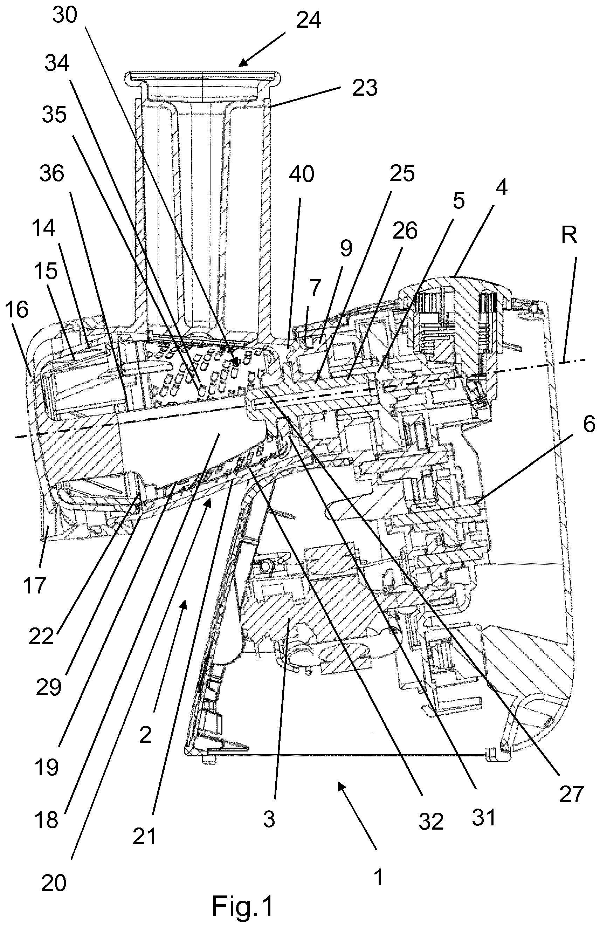

La figure 1 illustre un exemple de réalisation d'un dispositif de préparation d'aliments comprenant un outil de travail 30 rotatif selon un axe de rotation R et un boîtier 20 définissant un logement 21 présentant une ouverture de montage 22 pour la mise en place de l'outil de travail 30 dans le logement 21.

Tel que visible sur la figure 1, le logement 21 est déversant en direction de l'ouverture de montage 22. Le boîtier 20 présente une butée inférieure 29 pour retenir l'outil de travail 30 agencé dans le logement 21. La butée inférieure 29 est formée à proximité de l'ouverture de montage 22.

Le boîtier 20 présente une cheminée 23 pour introduire les aliments à transformer. Le boîtier 20 porte un organe de transmission 25. L'organe de transmission 25 comporte une première extrémité 26 s'étendant à l'extérieur du logement 21. La première extrémité 26 est par exemple formée par un arbre de section hexagonale ou carrée. L'organe de transmission 25 comporte une deuxième extrémité 27 agencée dans le logement 21. La deuxième extrémité 27 est prévue pour entraîner en rotation l'outil de travail 30. L'organe de transmission 25 est monté libre en rotation par rapport au boîtier 20. L'outil de travail 30 est monté amovible sur l'organe de transmission 25.

Le dispositif de préparation d'aliments illustré sur la figure 1 comporte un poussoir 24 pouvant être déplacé dans la cheminée 23 pour pousser les aliments vers l'outil de travail 30.

L'outil de travail 30 rotatif comporte une extrémité d'entraînement 31 et une paroi latérale 32 issue de l'extrémité d'entraînement 31. L'extrémité d'entraînement 31 de l'outil de travail 30 monté dans le logement 21 vient en prise avec l'organe de transmission 25 pour entraîner en rotation l'outil de travail 30.

La paroi latérale 32 présente au moins un organe de travail externe 34. Dans l'exemple de réalisation illustré sur la figure 1, la paroi latérale 32 ménage une ouverture frontale 36 pour l'évacuation des morceaux d'aliments découpés.

L'ouverture frontale 36 est agencée à l'opposé de l'extrémité d'entraînement 31. La paroi latérale 32 présente plusieurs organes de travail externes 34 et chaque organe de travail externe 34 est adjacent à un passage traversant 35.

Tel que visible sur la figure 1, la partie inférieure de la paroi latérale 32 de l'outil de travail 30 monté dans le logement 21 est inclinée vers le bas en direction de l'ouverture frontale 36. Dans l'exemple de réalisation illustré sur la figure 1, la paroi latérale 32 présente une configuration tronconique. A titre de variante, d'autres configurations ménageant une ouverture frontale 36 pour l'évacuation des morceaux d'aliments découpés peuvent être envisagées, notamment une configuration cylindrique.

Tel que visible sur la figure 1, la cheminée 23 débouche dans le logement 21 au moins partiellement en regard du ou de l'un au moins des organes de travail externes 34.

Selon une disposition connue du document EP2159015, le logement 21 présente un renfoncement annulaire 40 agencé autour de l'organe de transmission 25. Le renfoncement annulaire 40 est agencé entre l'organe de transmission 25 et la cheminée 23.

Tel que bien visible sur la figure 1, l'extrémité d'entraînement 31 présente un fond plan. L'extrémité d'entraînement 31 est agencée entre la cheminée 23 et le renfoncement annulaire 40.

Le dispositif de préparation d'aliments illustré sur la figure 1 comprend en outre un élément motorisé 1 assemblé avec le boîtier 20. Le boîtier 20 appartient ainsi à un accessoire 2 monté amovible par rapport à l'élément motorisé 1. Le boîtier 20 comporte à cet effet des moyens de fixation 9 prévus pour venir en prise avec des moyens de fixation complémentaires 7 de l'élément motorisé 1. Dans l'exemple de réalisation illustré sur la figure 1, les moyens de fixation 9 et les moyens de fixation complémentaires 7 sont des moyens de fixation à baïonnette. A titre de variante, d'autres moyens de fixation peuvent être utilisés, notamment une bague de verrouillage assemblée par vissage ou par baïonnette, ou encore des crochets de retenue.

L'élément motorisé 1 loge un moteur électrique 3 piloté par un dispositif de commande 4. Le moteur électrique 3 est relié à une sortie d'entraînement 5, si désiré par l'intermédiaire d'un dispositif de transmission 6. Le dispositif de transmission 6 peut notamment comporter un réducteur. La vitesse de rotation de la sortie d'entraînement 5 peut être variable. De préférence, la vitesse de rotation de la sortie d'entraînement 5 se situe et/ou est incluse dans la plage de vitesses comprise entre 100 et 200 t/min.

L'organe de transmission 25 est entraîné par le moteur électrique 3 disposé dans l'élément motorisé 1. L'organe de transmission 25 est entraîné par la sortie d'entraînement 5. La première extrémité 26 de l'organe de transmission 25 vient en prise avec la sortie d'entraînement 5. La deuxième extrémité 27 de l'organe de transmission 25 entraîne l'outil de travail 30 agencé dans le logement 21.

Plus particulièrement dans l'exemple illustré sur la figure 1, l'élément motorisé 1 porte le boîtier 20.

Le dispositif de préparation d'aliments illustré sur la figure 1 comprend en outre un organe de pressage 14. L'organe de pressage 14 est entraîné en rotation par l'outil de travail 30. De manière préférée, l'organe de pressage 14 est porté par l'outil de travail 30.

Le dispositif de préparation d'aliments illustré sur la figure 1 comprend en outre un organe de filtration 15. L'organe de filtration 15 comporte une paroi filtrante s'étendant en regard de l'organe de pressage 14. De préférence la paroi filtrante de l'organe de filtration 15 s'étend de manière circonférentielle à partir d'une paroi de fond. La paroi filtrante est perforée et/ou ajourée de manière à laisser passer le jus et si désiré au moins une partie de la pulpe, tout en retenant les morceaux d'aliments découpés non encore pressés, ainsi que les résidus de pressage.

Le dispositif de préparation d'aliments illustré sur la figure 1 comprend en outre un déflecteur 16. Le déflecteur 16 présente une sortie d'écoulement 17. Le déflecteur 16 est par exemple monté sur le boîtier 20 autour de l'ouverture de montage 22. L'organe de filtration 15 est agencé entre l'organe de pressage 14 et la sortie d'écoulement 17. L'organe de filtration 15 est porté par le déflecteur 16. Ainsi l'organe de filtration 15 est porté par le boîtier 20.

Le dispositif de préparation d'aliments illustré sur la figure 1 comprend en outre un organe de raclage 18. L'organe de raclage 18 s'étend à l'intérieur de l'outil de travail 30. De manière préférée, l'organe de raclage 18 présente une arête de raclage 19 agencée au dessus de la face interne de la paroi latérale 32 de l'outil de travail 30. Dans l'exemple de réalisation illustré sur la figure 1, l'organe de raclage 18 est porté par l'organe de filtration 15. Plus particulièrement, l'organe de raclage 18 est issu de la paroi de fond de l'organe de filtration 15. L'organe de raclage 18 et l'organe de filtration 15 peuvent ainsi être réalisés en une seule pièce. En alternative, l'organe de raclage 18 peut par exemple être rapporté sur l'organe de filtration 15. A titre de variante, l'organe de raclage 18 pourrait notamment être porté par le déflecteur 16.

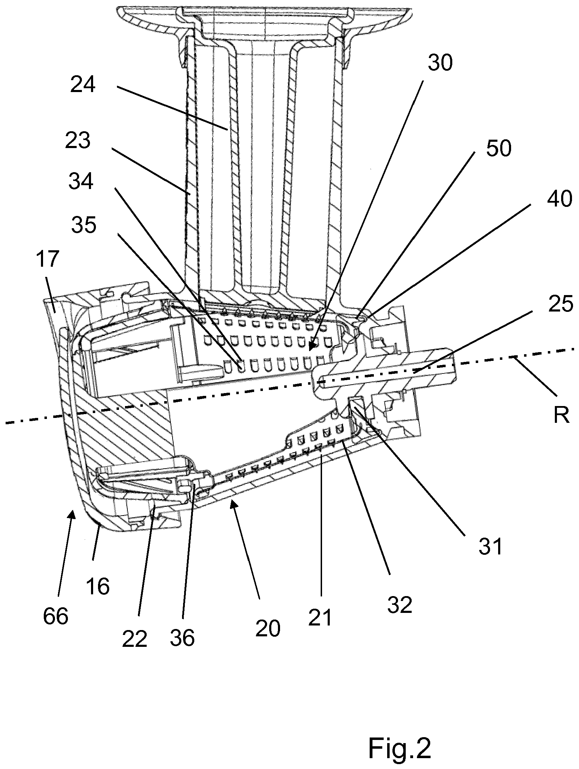

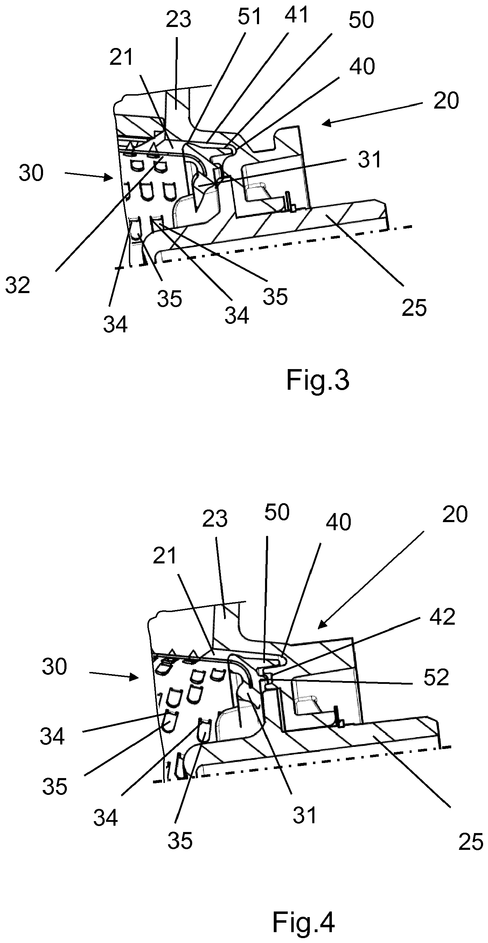

Les figures 2 et 3 d'une part et la figure 4 d'autre part illustrent deux exemples de réalisation d'un dispositif de préparation d'aliments selon l'invention. Pour simplifier la description, les éléments communs avec l'exemple de réalisation précédent conservent les mêmes dénominations et les mêmes numéros de références.

Les dispositifs de préparation d'aliments illustrés d'une part sur les figures 2 et 3 et d'autre part sur la figure 4 diffèrent du dispositif de préparation d'aliments illustré sur la figure 1 en ce que l'extrémité d'entrainement 31 présente une nervure annulaire 50 s'étendant à l'intérieur du renfoncement annulaire 40. La nervure annulaire 50 présente de préférence un jeu inférieur ou égal à 0,5 mm avec le renfoncement annulaire 40. De manière préférée, le jeu minimal avec le renfoncement annulaire 40 est de l'ordre de 0,2 mm. Une restriction annulaire est ainsi formée entre la nervure annulaire 50 et le renfoncement annulaire 40. Cette restriction annulaire est agencée entre la cheminée 23 et l'organe de transmission 25. Tel que mieux visible sur les figures 3 et 4, la nervure annulaire 50 est agencée en périphérie de l'extrémité d'entraînement 31.

Dans l'exemple de réalisation illustré sur les figures 2 et 3, l'extrémité d'entraînement 31 présente une conformation annulaire 51 s'étendant en direction d'une paroi interne circonférentielle 41 du logement 21 agencée entre la cheminée 23 et le renfoncement annulaire 40. La conformation annulaire 51 présente de préférence un jeu inférieur ou égal à 0,5 mm avec la paroi interne circonférentielle 41. De manière préférée, le jeu minimal avec la paroi interne circonférentielle 41 est de l'ordre de 0,3 mm. Une double restriction annulaire est ainsi formée entre l'outil de travail 30 rotatif et le logement 21. Cette double restriction annulaire est agencée entre la cheminée 23 et l'organe de transmission 25.

Dans l'exemple de réalisation illustré sur la figure 4, l'extrémité d'entraînement 31 présente une gorge annulaire 52 recevant une protubérance annulaire 42 agencée autour de l'organe de transmission 25. La protubérance annulaire 42 est agencée entre le renfoncement annulaire 40 et l'organe de transmission 25. La gorge annulaire 52 présente de préférence un jeu inférieur ou égal à 0,5 mm avec la protubérance annulaire 42. De manière préférée, le jeu minimal avec la protubérance annulaire 42 est de l'ordre de 0,3 mm. Une chicane annulaire est ainsi formée entre l'outil de travail 30 rotatif et le logement 21. Cette chicane est agencée entre la cheminée 23 et l'organe de transmission 25.

Tel que visible sur la figure 2, le déflecteur 16 a été pivoté autour de l'ouverture de montage 22 selon l'axe de rotation R et la sortie d'écoulement 17 est agencée en position haute. La sortie d'écoulement 17 est disposée plus haut que la deuxième extrémité 27 de l'organe de transmission 25 s'étendant dans le logement 21. Le dispositif de préparation d'aliments comporte ainsi un organe de rétention 66 formant avec le logement 21 un réceptacle recevant au moins une partie de l'organe de transmission 25. L'organe de rétention 66 prolonge le logement 21 pour retenir les aliments transformés par l'outil de travail 30.

Dans l'exemple de réalisation illustré sur la figure 2, l'organe de rétention 66 est formé par le déflecteur 16. L'organe de rétention 66 est ainsi porté par le boîtier 20.

Les dispositifs de préparation d'aliments illustrés sur les figures 2 à 4 fonctionnent et s'utilisent de la manière suivante.

L'utilisateur monte le boîtier 20 sur l'élément motorisé 1 et met en place l'outil de travail 30 dans le logement 21 du boîtier 20. L'extrémité d'entraînement 31 de l'outil de travail 30 monté dans le logement 21 vient en prise avec l'organe de transmission 25 pour entraîner en rotation l'outil de travail 30. L'utilisateur peut ensuite si désiré mettre en place l'organe de pressage 14 sur l'outil de travail 30, puis l'organe de filtration 15 et le déflecteur 16 sur le boîtier 20.

L'utilisateur peut alors mettre en marche l'appareil et introduire les aliments dans la cheminée 23 après avoir placé un récipient sous la sortie d'écoulement 17. Les aliments sont d'abord découpés par les organes de travail externes 34. Les aliments peuvent ensuite être pressés entre l'organe de pressage 14 et l'organe de filtration 15. Toutefois le dispositif de préparation d'aliments selon l'invention peut être utilisé sans l'organe de pressage 14 et/ou sans l'organe de filtration 15. Une partie du jus peut s'écouler dans le logement 21 à l'extérieur de l'outil de travail 30. La restriction annulaire formée entre l'outil de travail 30 et le logement 21 permet de mieux bloquer les particules dures un peu volumineuses telles que les pépins. La restriction annulaire formée entre l'outil de travail 30 et le logement 21 permet aussi d'entraver la progression vers l'organe de transmission 25 des petites particules d'aliments issues du déchiquetage des aliments par l'outil de travail 30. La restriction annulaire formée entre l'outil de travail 30 et le logement 21 permet encore de contrarier la progression vers l'organe de transmission 25 des jus et des petites particules d'aliments issus du déchiquetage des aliments par l'outil de travail 30.

Les réalisations proposées sont particulièrement économiques car elles ne nécessitent pas d'utiliser de joint d'étanchéité souple. La mise en place et le retrait de l'outil de travail 30 rotatif sont facilitées. Ces dispositions favorisent une bonne longévité du dispositif de préparation d'aliments.

Lorsque le dispositif de préparation d'aliments est utilisé avec le déflecteur 16 présentant la sortie d'écoulement 17 en position basse, tel que représenté sur la figure 1, le jus peut s'écouler par la sortie d'écoulement 17. L'utilisateur peut aussi pivoter en rotation le déflecteur 16 autour de l'ouverture de montage 22 pour modifier la position de la sortie d'écoulement 17 et interrompre l'écoulement du jus. Le déflecteur 16 forme alors l'organe de rétention 66 et le niveau de liquide peut ainsi monter à l'intérieur du réceptacle formé par l'organe de rétention 66 et le logement 21, notamment si l'utilisateur laisse tourner l'outil de travail 30 dans le logement 21. Les dispositions de l'invention permettent de contrarier la progression des liquides vers l'organe de transmission 25.

A titre de variante, l'outil de travail 30 rotatif ne comporte pas nécessairement une paroi latérale 32 ménageant une ouverture frontale 36 pour l'évacuation des morceaux d'aliments découpés et présentant plusieurs organes de travail externes 34 chacun adjacent à un passage traversant 35. La paroi latérale 32 peut notamment présenter un ou plusieurs organes de travail externes tels qu'un filet pour former une vis de pressage.

A titre de variante, l'organe de transmission 25 pourrait être entraîné en rotation par un moteur électrique porté par le boîtier 20.

A titre de variante, une partie de l'organe de rétention 66 pourrait notamment être formée par une partie non filtrante de l'organe de filtration 15 agencée entre le déflecteur 16 et le logement 21.

A titre de variante, le dispositif de préparation d'aliments ne comporte pas nécessairement un organe de pressage 14 et/ou un organe de filtration 15 et/ou un déflecteur 16.

La présente invention n'est nullement limitée aux exemples de réalisation décrits, mais englobe de nombreuses modifications dans le cadre des revendications.

## Revendications

1. Dispositif de préparation d'aliments comprenant :
- un outil de travail (30) rotatif comportant une extrémité d'entraînement (31) et une paroi latérale (32) issue de l'extrémité d'entraînement (31), la paroi latérale (32) présentant au moins un organe de travail externe (34),
- un boîtier (20) définissant un logement (21) présentant une ouverture de montage (22) pour la mise en place de l'outil de travail (30) dans le logement (21), le boîtier (20) présentant une cheminée (23) pour introduire les aliments à transformer, la cheminée (23) débouchant dans le logement (21) au moins partiellement en regard du ou de l'un au moins des organes de travail externes (34), le boîtier (20) portant un organe de transmission (25), l'extrémité d'entraînement (31) de l'outil de travail (30) monté dans le logement (21) venant en prise avec l'organe de transmission (25) pour entraîner en rotation l'outil de travail (30), le logement (21) présentant un renfoncement annulaire (40) agencé autour de l'organe de transmission (25), le renfoncement annulaire (40) étant agencé entre l'organe de transmission (25) et la cheminée (23),
**caractérisé en ce que** l'extrémité d'entrainement (31) présente une nervure annulaire (50) s'étendant à l'intérieur du renfoncement annulaire (40).

2. Dispositif de préparation d'aliments selon la revendication 1, **caractérisé en ce que** la nervure annulaire (50) est agencée en périphérie de l'extrémité d'entraînement (31).

3. Dispositif de préparation d'aliments selon l'une des revendications 1 ou 2, **caractérisé en ce que** la nervure annulaire (50) présente un jeu inférieur ou égal à 0,5 mm avec le renfoncement annulaire (40).

4. Dispositif de préparation d'aliments selon l'une des revendications 1 à 3, **caractérisé en ce que** l'extrémité d'entraînement (31) présente une conformation annulaire (51) s'étendant en direction d'une paroi interne circonférentielle (41) du logement (21) agencée entre la cheminée (23) et le renfoncement annulaire (40).

5. Dispositif de préparation d'aliments selon la revendication 4, **caractérisé en ce que** la conformation annulaire (51) présente un jeu inférieur ou égal à 0,5 mm avec la paroi interne circonférentielle (41).

6. Dispositif de préparation d'aliments selon l'une des revendications 1 à 5, **caractérisé en ce que** l'extrémité d'entraînement (31) présente une gorge annulaire (52) recevant une protubérance annulaire (42) agencée autour de l'organe de transmission (25), la protubérance annulaire (42) étant agencée entre le renfoncement annulaire (40) et l'organe de transmission (25).

7. Dispositif de préparation d'aliments selon la revendication 6, **caractérisé en ce que** la gorge annulaire (52) présente un jeu inférieur ou égal à 0,5 mm avec la protubérance annulaire (42).

8. Dispositif de préparation d'aliments selon l'une des revendications 1 à 7, **caractérisé en ce que** le ou au moins l'un des organes de travail externes (34) est adjacent à un passage traversant (35) et **en ce que** la paroi latérale (32) ménage une ouverture frontale (36) pour l'évacuation des morceaux d'aliments découpés.

9. Dispositif de préparation d'aliments selon la revendication 8, **caractérisé en ce que** chaque organe de travail externe (34) est adjacent à un passage traversant (35).

10. Dispositif de préparation d'aliments selon l'une des revendications 1 à 9, **caractérisé en ce qu'**il comporte un poussoir (24) pouvant être déplacé dans la cheminée (23) pour pousser les aliments vers l'outil de travail (30).

11. Dispositif de préparation d'aliments selon l'une des revendications 1 à 10, **caractérisé en ce qu'**il comporte un organe de rétention (66) porté par le boîtier (20), l'organe de rétention (66) prolongeant le logement (21) pour retenir les aliments transformés par l'outil de travail (30).

12. Dispositif de préparation d'aliments selon la revendication 11, **caractérisé en ce que** l'organe de rétention (66) forme avec le logement (21) un réceptacle recevant au moins une partie de l'organe de transmission (25).

13. Dispositif de préparation d'aliments selon l'une des revendications 11 ou 12, **caractérisé en ce que** l'organe de rétention (66) est directement monté sur le boîtier (20).

14. Dispositif de préparation d'aliments selon l'une des revendications 1 à 13, **caractérisé en ce qu'**il comprend en outre un élément motorisé (1) assemblé avec le boîtier (20), **en ce que** l'organe de transmission (25) est monté libre en rotation par rapport au boîtier (20), et **en ce que** l'organe de transmission (25) est entraîné par un moteur électrique (3) disposé dans l'élément motorisé (1).

15. Dispositif de préparation d'aliments selon la revendication 14, **caractérisé en ce que** l'élément motorisé (1) porte le boîtier (20).

## Patentansprüche

1. Vorrichtung zur Zubereitung von Lebensmitteln, die Folgendes umfasst:
- ein drehendes Arbeitswerkzeug (30) mit einem Antriebsende (31) und einer Seitenwand (32), die aus dem Antriebsende (31) hervorgeht, wobei die Seitenwand (32) mindestens ein außenliegendes Arbeitselement (34) aufweist,
- ein Gehäuse (20), das eine Aufnahme (21) definiert, die eine Montageöffnung (22) zum Einsetzen des Arbeitswerkzeugs (30) in die Aufnahme (21) aufweist, wobei das Gehäuse (20) einen Schacht (23) zum Einfüllen der zu verarbeitenden Lebensmittel aufweist, wobei der Schacht (23) zumindest teilweise gegenüber dem oder zumindest einem der außenliegenden Arbeitselemente (34) in die Aufnahme (21) mündet, wobei das Gehäuse (20) ein Übertragungselement (25) trägt, und wobei das Antriebsende (31) des in die Aufnahme (21) eingesetzten Arbeitswerkzeugs (30) mit dem Übertragungselement (25) in Eingriff kommt, um das Arbeitswerkzeug (30) in Drehung zu versetzen, wobei die Aufnahme (21) eine ringförmige Vertiefung (40) aufweist, die um das Übertragungselement (25) herum verläuft, wobei die ringförmige Vertiefung (40) zwischen dem Übertragungselement (25) und dem Schacht (23) angeordnet ist,
**dadurch gekennzeichnet, dass** das Antriebsende (31) eine ringförmige Rippe (50) aufweist, die in der ringförmigen Vertiefung (40) verläuft.

2. Vorrichtung zur Zubereitung von Lebensmitteln nach Anspruch 1, **dadurch gekennzeichnet, dass** sich die ringförmige Rippe (50) am Umfang des Antriebsendes (31) befindet.

3. Vorrichtung zur Zubereitung von Lebensmitteln nach einem der Ansprüche 1 oder 2, **dadurch gekennzeichnet, dass** die ringförmige Rippe (50) gegenüber der ringförmigen Vertiefung (40) ein Spiel von höchstens 0,5 mm hat.

4. Vorrichtung zur Zubereitung von Lebensmitteln nach einem der Ansprüche 1 bis 3, **dadurch gekennzeichnet, dass** das Antriebsende (31) ein ringförmig geformtes Element (51) aufweist, das in Richtung einer umlaufenden Innenwand (41) der Aufnahme (21) verläuft, die zwischen dem Schacht (23) und der ringförmigen Vertiefung (40) angeordnet ist.

5. Vorrichtung zur Zubereitung von Lebensmitteln nach Anspruch 4, **dadurch gekennzeichnet, dass** das ringförmig geformte Element (51) gegenüber der umlaufenden Innenwand (41) ein Spiel von höchstens 0,5 mm hat.

6. Vorrichtung zur Zubereitung von Lebensmitteln nach einem der Ansprüche 1 bis 5, **dadurch gekennzeichnet, dass** das Antriebsende (31) eine ringförmige Rille (52) aufweist, die einen ringförmigen Vorsprung (42) aufnimmt, der um das Übertragungselement (25) verläuft, wobei der ringförmige Vorsprung (42) zwischen der ringförmigen Vertiefung (40) und dem Übertragungselement (25) angeordnet ist.

7. Vorrichtung zur Zubereitung von Lebensmitteln nach Anspruch 6, **dadurch gekennzeichnet, dass** die ringförmige Rille (52) gegenüber dem ringförmigen Vorsprung (42) ein Spiel von höchstens 0,5 mm hat.

8. Vorrichtung zur Zubereitung von Lebensmitteln nach einem der Ansprüche 1 bis 7, **dadurch gekennzeichnet, dass** zumindest eines der außenliegenden Arbeitselemente (34) an einen Durchlass (35) angrenzt und dass die Seitenwand (32) eine vordere Öffnung (36) für die Ausgabe der zerkleinerten Lebensmittelstücke bildet.

9. Vorrichtung zur Zubereitung von Lebensmitteln nach Anspruch 8, **dadurch gekennzeichnet, dass** jedes außenliegende Arbeitselement (34) an einen Durchlass (35) angrenzt.

10. Vorrichtung zur Zubereitung von Lebensmitteln nach einem der Ansprüche 1 bis 9, **dadurch gekennzeichnet, dass** sie einen Stopfer (24) umfasst, der in dem Schacht (23) bewegt werden kann, um die Lebensmittel in Richtung des Arbeitswerkzeugs (30) zu schieben.

11. Vorrichtung zur Zubereitung von Lebensmitteln nach einem der Ansprüche 1 bis 10, **dadurch gekennzeichnet, dass** sie ein Rückhalteelement (66) aufweist, das von dem Gehäuse (20) getragen wird, wobei das Rückhalteelement (66) die Aufnahme (21) verlängert, um die von dem Arbeitswerkzeug (30) verarbeiteten Lebensmittel zurückzuhalten.

12. Vorrichtung zur Zubereitung von Lebensmitteln nach Anspruch 11, **dadurch gekennzeichnet, dass** das Rückhalteelement (66) mit der Aufnahme (21) ein Behältnis bildet, das zumindest einen Teil des Übertragungselements (25) aufnimmt.

13. Vorrichtung zur Zubereitung von Lebensmitteln nach einem der Ansprüche 11 oder 12, **dadurch gekennzeichnet, dass** das Rückhalteelement (66) direkt an dem Gehäuse (20) angebracht ist.

14. Vorrichtung zur Zubereitung von Lebensmitteln nach einem der Ansprüche 1 bis 13, **dadurch gekennzeichnet, dass** sie unter anderem ein motorisiertes Element (1) umfasst, das mit dem Gehäuse (20) zusammengebaut ist, dass das Übertragungselement (25) frei drehbar zum Gehäuse (20) montiert ist und dass das Übertragungselement (25) von einem Elektromotor (3) angetrieben wird, der sich in dem motorisierten Element (1) befindet.

15. Vorrichtung zur Zubereitung von Lebensmitteln nach Anspruch 14, **dadurch gekennzeichnet, dass** das motorisierte Element (1) das Gehäuse (20) trägt.

## Claims

1. Device for preparing foodstuffs comprising:
- a rotary working tool (30) comprising a drive end (31) and a side wall (32) coming from the drive end (31), the side wall (32) having at least one external working member (34),
- a unit (20) defining a housing (21) having a mounting opening (22) to fit the working tool (30) in the housing (21), the unit (20) having a hollow shaft (23) to introduce the foodstuffs to be converted, the hollow shaft (23) opening into the housing (21) at least partially facing the or at least one of the of the external working member(s) (34), the unit (20) carrying a transmission member (25), the drive end (31) of the working tool (30) mounted in the housing (21) engaging with the transmission member (25) to drive in rotation the working tool (30), the housing (21) having an annular recess (40) arranged around the transmission member (25), the annular recess (40) being arranged between the transmission member (25) and the hollow shaft (23),
**characterised in that** the drive end (31) has an annular rib (50) extending inside the annular recess (40).

2. Device for preparing foodstuffs according to claim 1, **characterised in that** the annular rib (50) is arranged around the periphery of the drive end (31).

3. Device for preparing foodstuffs according to claim 1 or 2, **characterised in that** the annular rib (50) has a clearance of less than or equal to 0.5 mm with the annular recess (40).

4. Device for preparing foodstuffs according to claim 1 or 3, **characterised in that** the drive end (31) has an annular conformation (51) extending towards a circumferential internal wall (41) of the housing (21) arranged between the hollow shaft (23) and the annular recess (40).

5. Device for preparing foodstuffs according to claim 4, **characterised in that** the annular conformation (51) has a clearance of less than or equal to 0.5 mm with the circumferential internal wall (41).

6. Device for preparing foodstuffs according to one of claims 1 to 5, **characterised in that** the drive end (31) has an annular groove (52) receiving an annular protuberance (42) arranged around the transmission member (25), the annular protuberance (42) being arranged between the annular recess (40) and the transmission member (25).

7. Device for preparing foodstuffs according to claim 6, **characterised in that** the annular groove (52) has a clearance of less than or equal to 0.5 mm with the annular protuberance (42).

8. Device for preparing foodstuffs according to one of claims 1 to 7, **characterised in that** the or at least one of the external working member(s) (34) is adjacent to a cross passage (35) and **in that** the side wall (32) has a front opening (36) for the removal of the cut foodstuffs.

9. Device for preparing foodstuffs according to claim 8, **characterised in that** each external working member (34) is adjacent to a cross passage (35).

10. Device for preparing foodstuffs according to one of claims 1 to 9, **characterised in that** it comprises a pusher (24) that can be displaced in the hollow shaft (23) to push the foodstuffs towards the working tool (30).

11. Device for preparing foodstuffs according to one of claims 1 to 10, **characterised in that** it comprises a retention member (66) carried by the unit (20), the retention member (66) extending the housing (21) to retain the foodstuffs converted by the working tool (30).

12. Device for preparing foodstuffs according to claim 11, **characterised in that** the retention member (66) forms with the housing (21) a receptacle receiving at least a part of the transmission member (25).

13. Device for preparing foodstuffs according to claim 11 or 12, **characterised in that** the retaining member (66) is mounted directly on the unit (20).

14. Device for preparing foodstuffs according to one of claims 1 to 13, **characterised in that** it further comprises a motorised element (1) assembled with the unit (20), **in that** the transmission member (25) is mounted so as to rotate freely about the unit (20), and **in that** the transmission member (25) is driven by an electric motor (3) arranged in the motorised element (1).

15. Device for preparing foodstuffs according to claim 14, **characterised in that** the motorised element (1) carries the unit (20).
